# EUROPÄISCHE PATENTSCHRIFT

(11) **EP 2 384 621 B1**
(45) Veröffentlichungstag und Bekanntmachung des Hinweises auf die Patenterteilung: **19.02.2014**
(21) Anmeldenummer: 11003722.3
(22) Anmeldetag: 06.05.2011
(51) Int. Cl.: A01K 63/06

(54) **Beleuchtungseinrichtung, insbesondere für Aquarien und Terrarien und Verfahren zum Betrieb einer derartigen Einrichtung**
Lighting device, in particular for aquariums and terrariums and method for operating such a device
Dispositif d'éclairage, notamment pour aquariums et terrariums et procédé de fonctionnement d'un tel dispositif

(30) Priorität: 07.05.2010 AT 7702010; 14.05.2010 AT 8052010
(43) Veröffentlichungstag der Anmeldung: 09.11.2011
(73) Patentinhaber: Christoph, WACHTER, 1020 Wien (AT); Perez, Gonzalo, 1040 Wien (AT)
(72) Erfinder: Christoph, WACHTER, 1020 Wien (AT); Perez, Gonzalo, 1040 Wien (AT)
(74) Vertreter: Peham, Alois

(56) Entgegenhaltungen:
- EP-A2- 2 074 883
- WO-A1-2009/087583
- DE-A1-102004 058 604
- DE-A1-102008 013 589
- GB-A- 2 460 228
- JP-A- 10 162 609
- US-A1- 2005 135 104
- US-A1- 2007 253 196
- US-A1- 2008 218 995
- US-A1- 2008 290 816

## Beschreibung

Die Erfindung betrifft eine Beleuchtungseinrichtung, insbesondere für Aquarien und Terrarien, sowie ein Verfahren zum Betrieb einer derartigen Einrichtung.

Eine Beleuchtungseinrichtung der eingangs genannten Art ist beispielsweise aus der DE 10 2004 058 604 A1 bekannt.

Die Schrift beschreibt eine Beleuchtungseinrichtung für ein Aquarium, Terrarium oder dergleichen mit einem in einem Gehäuse angeordneten Leuchtmittel, wobei das Leuchtmittel wenigstens eine High-Power-LED-Anordnung umfasst und der High-Power-LED-Anordnung eine halbkugelförmige Linse, die einen Lichtabstrahlungswinkel von etwa 180° bewirkt, vorgelagert ist.

Aus der US 2008/0218995 ist ein Beleuchtungssystem für Aquarien bekannt, bei dem mittels Mikrocontroller die Beleuchtung eines Aquariums hinsichtlich Farbe und Helligkeit so gesteuert wird, dass Tageslicht, Mondlicht und die Übergänge, d.h. Sonnenaufgang und Sonnenuntergang simuliert werden können und komplette Tages- und Nachtzyklen gesteuert werden können.

Die US 2007253196 zeigt eine Beleuchtungeinrichtung mit einem LED-Array welches weiße und blaue LED's umfasst und über ein Kontrollsystem angesteuert werden kann.

Weitere gattungsgemäße Beleuchtungseinrichtungen sind aus der US 2008290816 und der W02007/045786 bekannt.

Aquarienbeleuchtungen sind nach dem bekannten Stand der Technik entweder frei hängend über einem nach oben hin offenen Aquarium (,,offene Aquarien") angebracht, oder in eine Abdeckung integriert (,,geschlossene Aquarien").

Bei Neueinrichtung eines Aquariums werden die Gestaltung des Bodengrundes (Sand, Kies, Wurzelholz, etc) und Bepflanzung des Aquariums sinnvollerweise vor Anbringen des Beleuchtungssystems durchgeführt. Im weiteren Lebenszyklus eines Aquariums ist es jedoch immer wieder erforderlich, händisch einzugreifen; sei es, um schnell wachsende Pflanzen zurückzuschneiden, sei es, um neue Pflanzen oder Dekoration einzubringen, oder um tierische Bewohner des Aquariums einzufangen oder auszusetzen.

Bei nach oben hin offenen Aquarien besteht zwar ein relativ ungehinderter Zugang zum und Zugriff in das Aquarium, jedoch haben "offene" Aquarien den wesentlichen Nachteil, dass der durch konstantes Verdunsten (beschleunigt durch die in Warmwasseraquarien erhöhte Temperatur sowie durch die Hitzeentwicklung der über dem Aquarium befindlichen Lampen) eintretende Wasserverlust im Aquarium regelmäßig durch Zugabe von destilliertem/entionisiertem Wasser ausgeglichen werden muss, um einen Anstieg des Salz- und Mineralgehaltes des verbleibenden Wassers auf unphysiologische Werte zu verhindern.

Geschlossene Aquarien haben hier den Vorteil, dass das verdunstete Wasser unmittelbar an der geschlossenen Abdeckung wieder kondensiert und in das Aquarium zurücktropft. Jedoch ist diese Abdeckung aktuell nicht mit der Aquarienbeleuchtung verbunden, sondern frei darüber angebracht. Wird diese Abdeckung abgenommen, besteht demnach kein unmittelbar ungehinderter Zugriff auf das Innere des Aquariums, dieser ist weiterhin durch die am Rahmen festgemachten Beleuchtungseinheiten blockiert ist, die gesondert entfernt werden müssen. Dies ist oft mit hohem Aufwand verbunden.

Der Erfindung liegt die Aufgabe zugrunde, den Stand der Technik weiterzuentwickeln.

Diese Aufgabe wird erfindungsgemäß gelöst mit einer Beleuchtungseinrichtung der eingangs genannten Art, bei der die Leuchtelemente jeweils aus mehreren Lichtquellen aufgebaut sind und wobei Gruppen von Leuchtelementen zu Leuchtmodulen zusammengefasst sind, gemäß Anspruch 1.

Die erfindungsgemäße Beleuchtungseinrichtung kann in einfacher Weise an unterschiedlichste Anforderungen angepasst werden, durch balkenförmigen Aufbau der Leuchtmodule lassen sich in besonders einfacher Weise Beleuchtungseinrichtungen für Aquarien und Terrarien in den handelsüblichen Größen realisieren.

Erfindungsgemäß sind die Leuchtelemente in ein aufklappbares Abdeckelement integriert.

Günstig ist es dabei, wenn ein äußerer Rahmen vorgesehen ist, der auf dem Aquarium aufliegt, wenn das aufklappbare Abdeckelement an diesem äußeren Rahmen aufklappbar befestigt ist, dass das aufklappbare Abdeckelement weiterhin annähernd quaderförmig gestaltet ist und im geschlossenen Zustand planparallel zu der Querschnittsfläche des Rahmens liegt und von diesem seitlich umschlossen wird.

In Verbindung mit einer entsprechend eingerichteten Steuervorrichtung zur individuellen Ansteuerung der Lichtquellen, Leuchtelemente und Leuchtmodule können räumliche Beleuchtungseffekte, wie farbliche Beleuchtungsunterschiede, Hell-Dunkel-Übergänge, das Hervorheben einzelner Punkte oder aber Schatten gestaltet werden.

Besonders vorteilhaft sind auch zeitliche Abläufe der Beleuchtungsverhältnisse.

Durch Verbindung der räumlichen Beleuchtungsunterschiede mit zeitlichen Abläufen können natürliche Beleuchtungsverhältnisse und Beleuchtungsverläufe simuliert werden.

So können beispielsweise ein Sonnenaufgang an einer definierten "Ostseite" eines Aquariums, der Sonnenuntergang an der gegenüberliegenden "Westseite" mit den entsprechenden Farb-und Helligkeitsverläufen, Mondschein oder Gewitterstimmung mit Blitzen simuliert werden.

Dieser Simulation können die Beleuchtungsverhältnisse und Beleuchtungsverläufe eines bestimmten geografischen Ortes zu einer bestimmten Zeit und über einen bestimmten Zeitraum hinweg zugrunde gelegt werden.

Zur Vereinfachung der Steuerungsabläufe kann es vorteilhaft sein, alle Leuchtelemente eines Leuchtmodules (Mod1, Mod2, ... Modn+1) in gleicher Weise anzusteuern.

Die Erfindung wird anhand von Figuren näher erläutert.

Es zeigen beispielhaft:
Fig. 1 ein erfindungsgemäßes Leuchtmodul,
Fig. 2 die Zusammenfassung einer Mehrzahl von Leuchtmodulen zu einer erfindungsgemäßen Beleuchtungseinrichtung
Fig.3 eine schematische Darstellung einer zeitlichen Beleuchtungsabfolge.
Fig. 4 eine erfindungsgemäße Aquarienabdeckung im geöffneten Zustand.
Fig. 5 eine erfindungsgemäße Aquarienabdeckung im geschlossenen Zustand.

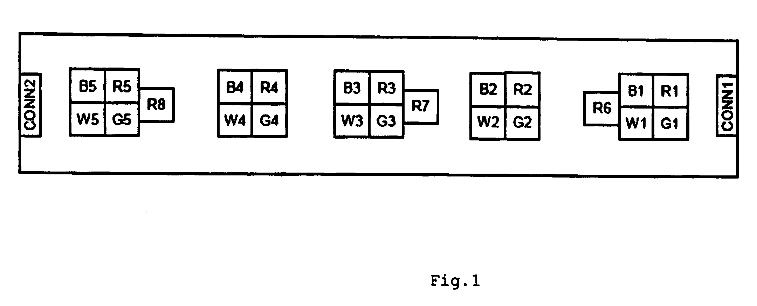

Das Leuchtmodul nach Fig. 1 umfasst 5 Leuchtelemente,die jeweils aus mehreren Lichtquellen aufgebaut sind.

Als Lichtquellen werden im Ausführungsbeispiel sogenannte Superflux-Leuchtdioden in Mehrschichttechnik (LED) mit der Lichtfarbe rot, (rote LED R1, R2, ... R8), mit der Lichtfarbe (blaue LED B1, B2, ... B5), mit der Lichtfarbe grün (grüne LED G1, G2, ... G5) und mit weißer Lichtfarbe ( weiße LED W1, W2, ... W5) eingesetzt.

Leuchtdioden emittieren Licht in einem begrenzten Spektralbereich, das Licht ist nahezu monochrom. Deshalb sind sie besonders effizient im Vergleich zu anderen Lichtquellen. Beim Einsatz zur Beleuchtung von Aquarien oder Terrarien ist vor allem die vergleichsweise geringe Erwärmung ein erheblicher Vorteil. Dieser Effekt kommt besonders deutlich beim Einsatz der Superflux-Leuchtdioden zum tragen.

Da rotes Licht für die Photosynthese von Wasserpflanzen besonders wichtig ist, weist das erfindungsgemäße Leuchtmodul eine höhere Anzahl von roten LED's auf, als blaue, grüne oder weiße LED's. Die zusätzlichen roten LED's sind in dem Leuchtmodul jeweils neben einem Leuchtelement angeordnet. Das beispielhafte Leuchtmodul nach Fig. 1 weist damit in Summe 23 LED's auf, jeweils fünf in den Farben blau, grün und weiß B1, B2, ... B5; G1, G2, ... G5; W1, W2, ... W5, sowie acht rote LED's R1, R2, ... R8.

Als elektrische Verbindungselemente dienen zwei Stecker conn1, conn2 an den Längsseiten des Leuchtmodules.

Durch die Kombination von jeweils einer roten, einer blauen, einer grünen und einer weißen LED zu einem Leuchtelement B1, G1, R1, W1 bzw. B2, G2, R2, W2 ... kann durch die Mischung des Lichtes der einzelnen Lichtquellen mit entsprechender Ansteuerung der einzelnen LED's jedes Leuchtelement Licht jeder gewünschten Wellenlänge abstrahlen.

So kann gleichzeitig beispielsweise das erste Leuchtelement B1, G1, R1, W1 gelbes Licht abstrahlen, während die weiteren

Leuchtelemente B2, G2, R2, W2 ..., B5, G5, R5, W5 Licht mit höherem Blau-Anteil abstrahlen. Damit kann unter anderem ein Sonnenstrahl simuliert werden, der eine bestimmte Stelle in einem Aquarium oder Terrarium hervorhebt.

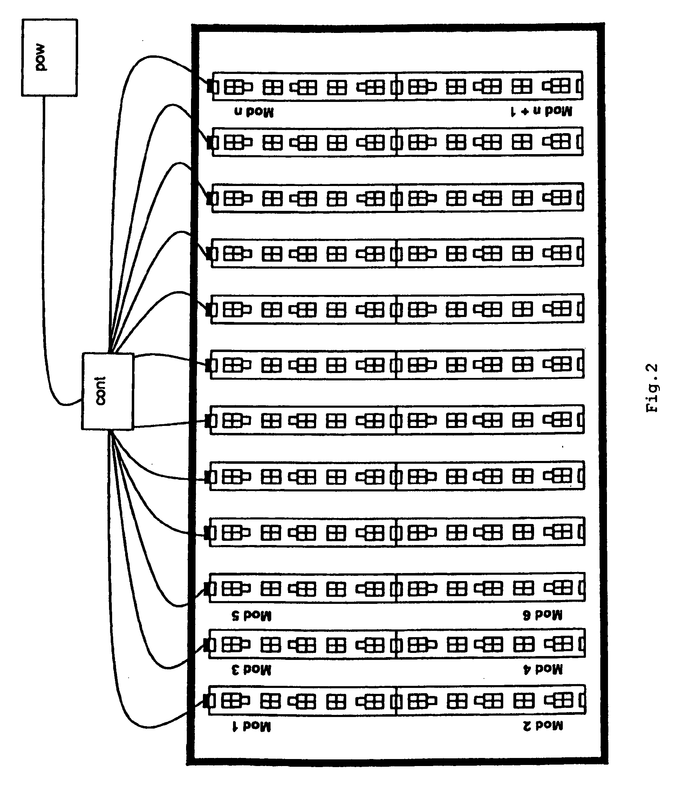

Den gestalterischen Möglichkeiten sind dabei kaum Grenzen gesetzt. Vor allem bei Kombination einer Mehrzahl von n+1 Leuchtmodulen Mod 1,...Mod n+1 , mit einer Steuervorrichtung cont und einer Stromversorgung pow zu einer Beleuchtungseinrichtung, wie sie in Fig. 2 dargestellt ist, sind eine Vielzahl von Lichteffekten und Beleuchtungsvarianten denkbar.

Insbesondere dann, wenn die örtlichen Variationsmöglichkeiten mit einem zeitlichen Verlauf kombiniert werden, bieten sich vorteilhafte Gestaltungsmöglichkeiten.

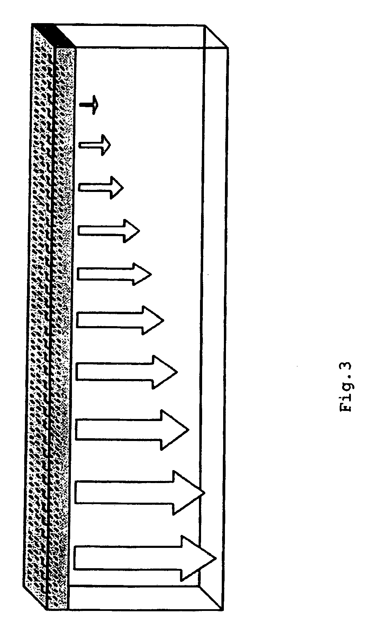

So kann wie in Fig. 3 schematisch dargestellt, beispielsweise der Lichtverlauf eines Tages dadurch simuliert werden, dass das Zentrum der stärksten Beleuchtung vom ersten Leuchtmodul Mod 1 in einem vorgegebenen Zeitraum über ein drittes Leuchtmodul Mod 3 bis zu einem n+1-ten Modules Mod n+1 wandert und somit den Verlauf des Sonnenstandes simuliert.

In diesem Fall werden alle Leuchtelemente eines Leuchtmodules Mod 1,...Mod n+1 in gleicher Weise angesteuert, wodurch die Steuerungsaufwände aber auch der Aufbau der Leuchtmodule vereinfacht wird.

Durch entsprechende Ansteuerung kann auch der Sonnenuntergang und Mondlicht, sowie der Verlauf des Mondlichtes simuliert werden.

Genauso ist es möglich, beispielsweise die durch Wellenbewegungen entstehenden Lichtspiele an einem Meeresriff in einem Aquarium zu simulieren, oder Gewittersituationen darzustellen.

Durch geeignete Wahl der Lichtfarbe kann aber auch das Algenwachstum gehemmt werden.

Besondere Möglichkeiten für Züchter werden auch dadurch geschaffen, dass es möglich ist, die Beleuchtungsverhältnisse an einem bestimmten Ort zu einer bestimmten Zeit zu simulieren.

So können beispielsweise Züchter von Buntbarschen die Lichtverhältnisse an einer bestimmten Stelle des Viktoriasees simulieren und so das Laich- und Brutverhalten positiv beeinflussen. Die Lichtverhältnisse können dabei beispielsweise auch mit der Wassertemperatur oder anderen Parametern verknüpft werden.

Vorteilhaft ist es dabei, wenn die Steuervorrichtung cont zur individuellen Ansteuerung der Lichtquellen, Leuchtelemente und Leuchtmodule so programmiert ist, dass durch Eingabe eines geografischen Ortes und ergänzender Parameter die jeweils entsprechenden Lichtverhältnisse und der zeitliche Ablauf ausgelöst werden. Dabei kann der Ablauf in Echtzeit oder aber in Zeitraffer erfolgen, einzelne Ereignisse wie Gewittersituationen können gesondert ausgelöst werden. Wenn die Steuereinrichtung beispielsweise drahtlos mit dem Internet kommuniziert, ist es darüber hinaus denkbar, die Lichtverhältnisse an die im Augenblick herrschenden Wetterbedingungen eines bestimmten geografischen Ortes anzupassen.

Die Information über die Beleuchtungsabläufe kann beispielsweise direkt in der Steuervorrichtung cont gespeichert sein, oder aber mittels üblicher Massenspeicher wie DVD oder USB-Massenspeicher verfügbar gemacht werden.

Durch den Einsatz von LEDs, die Licht im ultravioletten Wellenlängenbereich ausstrahlen, können beispielsweise in der Terraristik die für Reptilien zur Vitamin D3-Synthese erforderlichen Lichtverhältnisse geschaffen werden.

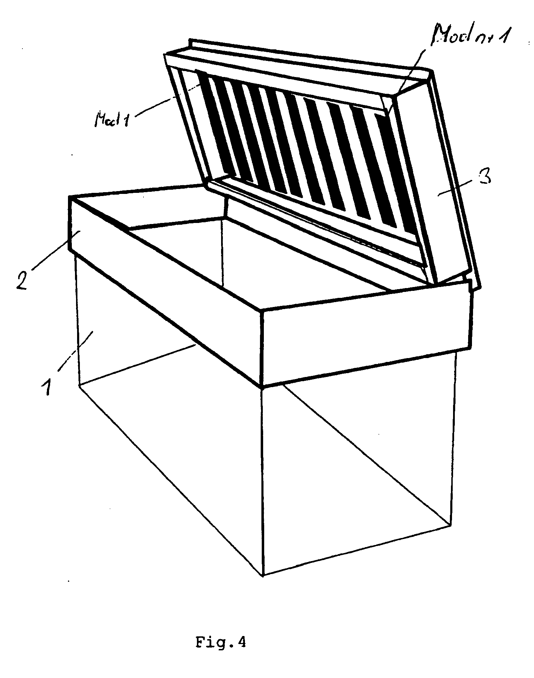

Wie in Fig. 4 dargestellt, umfasst die vorteilhafte Abdeckung eines Aquariums einen äußeren Rahmen 2, der auf dem Aquarium oder Terrarium 1 aufliegt, sowie ein aufklappbares Abdeckelement 3, welches an diesem äußeren Rahmen 2 aufklappbar befestigt ist.

Das aufklappbare Abdeckelement 3 ist annähernd quaderförmig gestaltet und enthält die für die Beleuchtung des Aquariums oder Terrariums vorgesehenen Beleuchtungselemente.

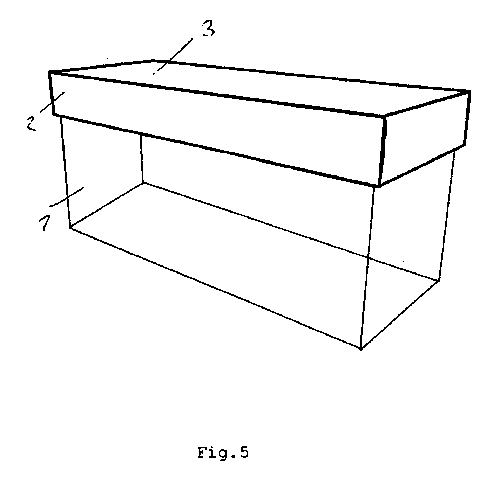

Im geschlossenen Zustand, wie er in Fig.5 dargestellt ist, liegt das aufklappbare Abdeckelement 3 annähernd planparallel zu der Querschnittsfläche des Rahmens 2 und wird von diesem seitlich umschlossen.

Damit wird eine nach oben hin geschlossene Abdeckung 2, 3 des Aquariums 1 gebildet, die verdunstendes Wasser kondensiert und dem Aquarium zurückführt;

Das bringt den großen Vorteil, dass die Vorzüge offener und geschlossener Aquarien miteinander kombiniert werden können: zum einen kann verdunstetes Wasser an der Abdeckung kondensieren und ins Aquarium zurücktropfen, zum anderen erlaubt das Hochklappen der Abdeckung samt integrierter Beleuchtung einen ungehinderten Zugriff auf das Innenleben des Aquariums. Darüber hinaus wird durch die geschlossene Abdeckung verhindert, dass Fische aus dem Aquarium springen können.

Da die verwendeten LEDs wesentlich dünner und leichter als aktuell verwendete Lichtquellen, wie zB Leuchtstoffröhren oder Quecksilberdampflampen / HQI Lampen sind, und bei vergleichbarer Lichtsausbeute deutlich weniger Wärme im Betrieb produzieren, ist damit auch der Aufbau vergleichsweise leichter und kompakter Abdeckungen möglich.

Die Vorteile der gegenständlichen Aquarienabdeckung im Vergleich zum Stand der Technik sind demnach folgende:
eine nach oben hin geschlossene Abdeckung des Aquariums, die verdunstendes Wasser kondensiert und dem Aquarium zurückführt;
eine aufklappbare Abdeckung, in die das Beleuchtungssystem des Aquariums zur Gänze integriert ist, sodass mit Aufklappen der Abdeckung ein ungehinderter Zugriff auf das Innere des Aquariums gegeben ist.

### Bezugszeichenliste

- Mod 1, . . .Mod n+1: Leuchtmodule
- CONN1, CONN2: Elektrische Steckverbindungen
- B1, B2, ... B5: Blaue LED
- G1, G2, ... G5: Grüne LED
- R1, R2, ... R8: Rote LED
- W1, W2, ... W5: Weisse LED
- cont: Steuervorrichtung
- pow: Stromversorgung
- 1: Aquarium
- 2: äußerer Rahmen
- 3: aufklappbares Abdeckelement

## Patentansprüche

1. Beleuchtungseinrichtung, insbesondere für Aquarien und Terrarien, welche eine Mehrzahl von Leuchtelementen umfasst, wobei die Leuchtelemente jeweils aus mehreren Lichtquellen (B1, B2, ... B5; G1, G2, ... G5; R1, R2, ... R8; W1, W2, ... W5) aufgebaut sind und wobei Gruppen von Leuchtelementen zu Leuchtmodulen (Mod1, Mod2, ... Modn+1) zusammengefasst sind und wobei eine Steuervorrichtung(cont) zur individuellen Ansteuerung der Lichtquellen (B1, B2, ... B5; G1, G2, ... G5; R1, R2, ... R8; W1, W2, ... W5), Leuchtelemente und Leuchtmodule (Mod1, Mod2, ... Modn+1) vorgesehen ist, **dadurch gekennzeichnet, dass** die Leuchtelemente in ein aufklappbares Abdeckelement (3) integriert sind.

2. Beleuchtungseinrichtung, insbesondere für Aquarien und Terrarien nach Anspruch 1, **dadurch gekennzeichnet, dass** die Leuchtmodule (Mod1, Mod2, ... Modn+1) balkenförmig aufgebaut sind.

3. Beleuchtungseinrichtung nach Anspruch 1 oder 2, **dadurch gekennzeichnet, dass** ein äußerer Rahmen (2) vorgesehen ist, der auf dem Aquarium (1) aufliegt, dass das aufklappbare Abdeckelement (3) an diesem äußeren Rahmen (2) aufklappbar befestigt ist, dass das aufklappbare Abdeckelement (3) weiterhin annähernd quaderförmig gestaltet ist und im geschlossenen Zustand planparallel zu der Querschnittsfläche des Rahmens (2)liegt und von diesem seitlich umschlossen wird.

4. Verfahren zum Betrieb einer Beleuchtungseinrichtung, insbesondere für Aquarien und Terrarien nach einem der Ansprüche 1 bis 3, **dadurch gekennzeichnet, dass** mittels individueller Ansteuerung der Lichtquellen (B1, B2, ... B5; G1, G2, ... G5; R1, R2, ... R8; W1, W2, ... W5), Leuchtelemente und Leuchtmodule (Mod1, Mod2, ... Modn+1) räumliche Beleuchtungsunterschiede erzielt werden.

5. Verfahren zum Betrieb einer Beleuchtungseinrichtung, insbesondere für Aquarien und Terrarien nach einem der Ansprüche 1 bis 3, **dadurch gekennzeichnet, dass** mittels individueller Ansteuerung der Lichtquellen (B1, B2, ... B5; G1, G2, ... G5 ; R1, R2, ... R8; W1, W2, ... W5), Leuchtelemente und Leuchtmodule (Mod1, Mod2, ... Modn+1)zeitliche Abläufe der Beleuchtungsverhältnisse erzielt werden.

6. Verfahren zum Betrieb einer Beleuchtungseinrichtung, insbesondere für Aquarien und Terrarien nach einem der Ansprüche 1 bis 3, **dadurch gekennzeichnet, dass** alle Leuchtelemente eines Leuchtmodules (Mod1, Mod2, ... Modn+1) in gleicher Weise angesteuert werden.

7. Verfahren zum Betrieb einer Beleuchtungseinrichtung, insbesondere für Aquarien und Terrarien nach einem der Ansprüche 1 bis 3, **dadurch gekennzeichnet, dass** mittels individueller Ansteuerung der Lichtquellen (B1, B2, ... B5; G1, G2, ... G5; R1, R2, ... R8; W1, W2, ... W5), Leuchtelemente und Leuchtmodule (Mod1, Mod2, ... Modn+1) natürliche Beleuchtungsverhältnisse und Beleuchtungsverläufe simuliert werden.

8. Verfahren zum Betrieb einer Beleuchtungseinrichtung, insbesondere für Aquarien und Terrarien nach Anspruch 4 oder 5, **dadurch gekennzeichnet, dass** der Simulation die Beleuchtungsverhältnisse und Beleuchtungsverläufe eines bestimmten geografischen Ortes zugrunde gelegt werden.

## Claims

1. Lighting device, in particular for aquariums and terrariums, which comprises a plurality of luminous elements, the luminous elements respectively being constructed from several light sources (B1, B2, ... B5; G1, G2, ... G5; R1, R2, ... R8; W1, W2, ... W5) and groups of luminous elements being combined to form luminous modules (Mod1, Mod2, ... Modn+1), and a controller (cont) being provided for individually driving the light sources (B1, B2, ... B5; G1, G2, ... G5; R1, R2, ... R8; W1, W2, ... W5), luminous elements and luminous modules (Mod1, Mod2, ... Modn+1), **characterized in that** the luminous elements are integrated in a hinged cover element (3).

2. Lighting device, in particular for aquariums and terrariums according to Claim 1, **characterized in that** the luminous modules (Mod1, Mod2, ... Modn+1) are constructed in the shape of bars.

3. Lighting device according to Claim 1 or 2, **characterized in that** there is provided an outer frame (2) which rests on the aquarium (1), **in that** the hinged cover element (3) is fastened on said outer frame (2) in a hinged fashion, and **in that** the hinged cover element (3) is, furthermore, configured in an approximately cuboid fashion and when in the closed state is situated in plane-parallel fashion relative to the cross-sectional surface of the frame (2) and is laterally surrounded thereby.

4. Method for operating a lighting device, in particular for aquariums and terrariums according to one of Claims 1 to 3, **characterized in that** three-dimensional differences in lighting are attained by individually driving the light sources (B1, B2, ... B5; G1, G2, ... G5; R1, R2, ... R8; W1, W2, ... W5), luminous elements and luminous modules (Mod1, Mod2, ... Modn+1).

5. Method for operating a lighting device, in particular for aquariums and terrariums according to one of Claims 1 to 3, **characterized in that** temporal sequences in the lighting conditions are attained by individually driving the light sources (B1, B2, ... B5; G1, G2, ... G5; R1, R2, ... R8; W1, W2, ... W5), luminous elements and luminous modules (Mod1, Mod2, ... Modn+1).

6. Method for operating a lighting device, in particular for aquariums and terrariums according to one of Claims 1 to 3, **characterized in that** all luminous elements of a luminous module (Mod1, Mod2, ... Modn+1) are driven in the same way.

7. Method for operating a lighting device, in particular for aquariums and terrariums according to one of Claims 1 to 3, **characterized in that** natural lighting conditions and lighting characteristics are simulated by individually driving the light sources (B1, B2, ... B5; G1, G2, ... G5; R1, R2, ... R8; W1, W2, ... W5), luminous elements and luminous modules (Mod1, Mod2, ... Modn+1).

8. Method for operating a lighting device, in particular for aquariums and terrariums according to Claim 4 or 5, **characterized in that** the simulation is based on the lighting conditions and lighting characteristics of a specific geographical location.

## Revendications

1. Dispositif d'éclairage, notamment pour aquariums et terrariums, comprenant une pluralité d'éléments lumineux, lesdits éléments lumineux étant constitués chacun de plusieurs sources de lumière (B1, B2, ... B5 ; G2, ...G5 ; R1, R2, ... R8 ; W1, W2, ... W5), et des groupes d'éléments lumineux étant regroupés en modules lumineux (Mod1, Mod2, ... Modn+1), et un dispositif de commande (cont) pour la commande individuelle des sources de lumière (B1, B2, ... B5 ; G2, ...G5 ; R1, R2, ... R8 ; W1, W2, ... W5), des éléments lumineux et des modules lumineux (Mod1, Mod2, ... Modn+1) étant prévu, **caractérisé en ce que** les éléments lumineux sont intégrés dans un élément de recouvrement (3) ouvrable par basculement.

2. Dispositif d'éclairage, notamment pour aquariums et terrariums, selon la revendication 1, **caractérisé en ce que** les modules lumineux (Mod1, Mod2, ... Modn+1) sont conçus en forme de barres.

3. Dispositif d'éclairage selon la revendication 1 ou 2, **caractérisé en ce qu'**il est prévu un cadre extérieur (2) qui repose sur l'aquarium (1), **en ce que** l'élément de recouvrement (3) ouvrable par basculement est fixé sur ce cadre extérieur (2) de façon à pouvoir être ouvert par basculement, **en ce que** l'élément de recouvrement (3) ouvrable par basculement est en outre de forme pratiquement parallélépipédique et situé, à l'état fermé, dans un plan parallèle à la surface de section transversale dudit cadre (2) et est entouré latéralement par celui-ci.

4. Procédé de fonctionnement d'un dispositif d'éclairage, notamment pour aquariums et terrariums, selon l'une des revendications 1 à 3, **caractérisé en ce qu'**au moyen d'une commande individuelle des sources de lumière (B1, B2, ... B5 ; G2, ...G5 ; R1, R2, ... R8 ; W1, W2, ... W5), des éléments lumineux et des modules lumineux (Mod1, Mod2, ... Modn+1) des variations spatiales d'éclairage sont obtenues.

5. Procédé de fonctionnement d'un dispositif d'éclairage, notamment pour aquariums et terrariums, selon l'une des revendications 1 à 3, **caractérisé en ce qu'**au moyen d'une commande individuelle des sources de lumière (B1, B2, ... B5 ; G2, ... G5 ; R1, R2, ... R8 ; W1, W2, ... W5), des éléments lumineux et des modules lumineux (Mod1, Mod2, ... Modn+1) des déroulements chronologiques des conditions d'éclairage sont obtenus.

6. Procédé de fonctionnement d'un dispositif d'éclairage, notamment pour aquariums et terrariums, selon l'une des revendications 1 à 3, **caractérisé en ce que** tous les éléments lumineux d'un module lumineux (Mod1, Mod2, ... Modn+1) sont commandés de la même façon.

7. Procédé de fonctionnement d'un dispositif d'éclairage, notamment pour aquariums et terrariums, selon l'une des revendications 1 à 3, **caractérisé en ce qu'**au moyen d'une commande individuelle des sources de lumière (B1, B2, ... B5 ; G2, ...G5 ; R1, R2, ... R8 ; W1, W2, ... W5), des éléments lumineux et des modules lumineux (Mod1, Mod2, ... Modn+1) des conditions et déroulements d'éclairage naturels sont simulés.

8. Procédé de fonctionnement d'un dispositif d'éclairage, notamment pour aquariums et terrariums, selon la revendication 4 ou 5, **caractérisé en ce que** la simulation est basée sur les conditions et déroulements d'éclairage d'un lieu géographique déterminé.
